# EUROPÄISCHE PATENTSCHRIFT

(11) **EP 2 655 853 B1**
(45) Veröffentlichungstag und Bekanntmachung des Hinweises auf die Patenterteilung: **27.08.2014**
(21) Anmeldenummer: 11779177.2
(22) Anmeldetag: 04.11.2011
(51) Int. Cl.: F02M 55/02, F02M 21/02

(54) **INJEKTORANORDNUNG**
INJECTOR ARRANGEMENT
AGENCEMENT D'INJECTEUR

(30) Priorität: 23.12.2010 DE 102010064115
(43) Veröffentlichungstag der Anmeldung: 30.10.2013
(73) Patentinhaber: Robert Bosch GmbH, 70442 Stuttgart (DE)
(72) Erfinder: STAHR, Wolf, 74232 Abstatt (DE); HAUG, Martin, 71263 Weil Der Stadt (DE); KIRSCHNER, Horst, 74336 Brackenheim-Hausen (DE); MILLER, Frank, 74360 Ilsfeld (DE)
(86) Internationale Anmeldenummer: PCT/EP2011/069419
(87) Internationale Veröffentlichungsnummer: WO 2012/084323

(56) Entgegenhaltungen:
- EP-A1- 1 550 805
- WO-A1-2010/049966
- DE-A1-102009 001 866
- FR-A1- 2 935 028
- US-B1- 7 556 022

## Beschreibung

### Stand der Technik

Die Erfindung betrifft eine Injektoranordnung, insbesondere einen Injektorblock für Brennstoffeinspritzanlagen von gemischverdichtenden, fremdgezündeten Brennkraftmaschinen. Hierbei betrifft die Injektoranordnung speziell die Zuteilung von Erdgas für die Brennkraftmaschine.

Für die Zufuhr von Erdgas, insbesondere komprimiertes Erdgas (CNG), sind für das jeweilige Kraftfahrzeug angepasste Anordnungen erforderlich, bei denen beispielsweise am entsprechenden Saugmodul geeignete Öffnungen für die Montage von Ventilen oder Befestigungspunkten für die Halter einer Brennstoffverteilerleiste erforderlich sind. Somit ist eine fahrzeugspezifische Anpassung nötig. Kostengünstige Nachrüstsätze für mit Benzin angetriebene Kraftfahrzeuge, die diese auf einen CNG-Betrieb nachrüsten, erreichen meist nicht die Qualität, welche speziell für Schwellenländer erforderlich ist.

Aus der WO 2010/049966 A1 ist bereits eine Brennstoffverteilereinrichtung insbesondere für gasförmige Brennstoffe (LPG, Methan) bekannt. Diese Brennstoffverteilereinrichtung umfasst einen Verteilerblock, der einen Gaseinlassstutzen sowie mehrere Zugangsöffnungen zu den Brennstoff abgebenden Düsen aufweist. Über Steuereinrichtungen unmittelbar am Verteilerblock werden die Düsendurchlässe gesteuert. Zudem ist an der Längsseite des Verteilerblocks eine elektrische Heizeinrichtung vorgesehen, mit der Restgas im Verteilerblock vor dem Starten der Brennkraftmaschine erwärmt werden kann.

Aus der FR 2 935 028 A ist ebenfalls bereits eine Brennstoffverteilereinrichtung bekannt, bei der mehrere Brennstoffeinspritzventile mit flüssigem Brennstoff versorgt werden. Die Brennstoffeinspritzventile sind über gebogene Verbindungshülsen mit einer Verteilerleitung verbunden. An Befestigungsabschnitten der Verbindungshülsen sind die Brennstoffeinspritzventile und die Verteilerleitung mittelbar mit dem Zylinderkopf verbunden.

### Offenbarung der Erfindung

Die erfindungsgemäße Injektoranordnung mit den Merkmalen des Anspruchs 1 hat den Vorteil, dass eine kompakte Ausgestaltung mit einem breiten Einsatzbereich möglich ist. Speziell kann eine kompakte und universelle Lösung für den Ersteinbau und zum Nachrüsten geschaffen werden, die kostengünstig und zugleich qualitativ hochwertig ist.

Durch die in den Unteransprüchen aufgeführten Maßnahmen sind vorteilhafte Weiterbildungen der im Anspruch 1 angegebenen Injektoranordnung möglich.

Die Brennstoffverteilerleiste dient vorzugsweise zum Verteilen von Erdgas auf die Einspritzventile. Hierdurch eignet sich die Injektoranordnung besonders für Erdgas, um einen Mischbetrieb einer gemischverdichtenden, fremdgezündeten Brennkraftmaschine mit Benzin und Erdgas zu ermöglichen. Das Erdgas ist hierbei vorzugsweise als komprimiertes Erdgas in einem Gasspeicher gespeichert, beispielsweise bei Drücken von etwa 20 MPa (200 bar). Solch ein komprimiertes Erdgas wird auch als CNG bezeichnet. Der Begriff des Erdgases ist allerdings nicht auf natürliches Erdgas beschränkt, sondern allgemein zu verstehen. Beispielsweise kann das Erdgas auch künstlich durch Kohlvergasung gewonnen werden. Somit sind unter dem Begriff Erdgas auch erdgasähnliche Brennstoffe zu verstehen.

Vorteilhaft ist es, dass die Anschlussstücke an ihren Ausgangsseiten jeweils eine Schlauchtülle aufweisen. Über geeignete Schlauchverbindungen kann hierdurch ein Anschluss an ein Saugrohr der Brennkraftmaschine erfolgen. Hierdurch wird eine große Flexibilität ermöglicht. Insbesondere ist eine Anpassung an unterschiedlich ausgestaltete Brennkraftmaschinen möglich. Die Injektoranordnung kann hierdurch auch an unterschiedlichst ausgestaltete Brennkraftmaschinen angepasst werden, beispielsweise sowohl an eine Reihenanordnung als auch an eine Boxeranordnung der Zylinder der Brennkraftmaschine.

Vorteilhaft ist es auch, dass der Gegenhalter mit den Anschlussstücken aus einem auf Kunststoff basierenden Kunststoffteil gebildet ist. Hierdurch können die Anschlussstücke zusammen mit dem Gegenhalter ausgestaltet sein, insbesondere als integriertes Spritzgussteil. Vorteilhaft ist allerdings auch, dass der Gegenhalter und die Anschlussstücke aus zumindest einem metallischen Werkstoff gebildet sind und dass die Anschlussstücke form- oder kraftschlüssig mit dem Gegenhalter verbunden sind. Beispielsweise können der Gegenhalter und die Anschlussstücke aus Stahl oder Aluminium ausgestaltet sein. Die Verbindung der Anschlussstücke mit dem Gegenhalter kann durch Schraub-, Löt- oder Schweißverbindungen ausgestaltet sein.

Außerdem ist es vorteilhaft, dass die Einspritzventile mittels jeweils zumindest eines Dichtrings an den Gegenhalter gefügt sind und dass die Dichtringe als elastische Dichtringe ausgebildet sind. Ferner ist es vorteilhaft, dass die Einspritzventile zwischen dem Gegenhalter und der Brennstoffverteilerleiste eingespannt und/oder in Bezug auf den Gegenhalter schwimmend gelagert sind. Durch die elastischen Dichtringe ist es hierbei möglich, eine schwimmende Lagerung der Einspritzventile in Bezug auf den Gegenhalter zu erreichen. Beispielsweise können die Dichtringe jeweils aus einem Elastomer gebildet sein. Hierdurch wird ein direkter Kontakt der Einspritzventile mit dem Gegenhalter vermieden, so dass eine mögliche Schwingungsübertragung in die Einspritzventile, die einen erhöhten Verschleiß bedingen kann, verhindert ist.

Außerdem ist es vorteilhaft, dass der Gegenhalter durch separate Verbindungselemente mit der Brennstoffverteilerleiste verbunden ist. Möglich ist es auch, dass in vorteilhafter Weise an dem Gegenhalter zumindest ein Verbindungselement ausgestaltet ist und dass das Verbindungselement des Gegenhalters mit der Brennstoffverteilerleiste verbunden ist. Hierdurch kann die Injektoranordnung als kompakte Einheit ausgestaltet werden, bei der die einzelnen Bauteile zuverlässig miteinander verbunden und zueinander positioniert sind. Hierdurch erleichtert sich auch die Montage der gesamten Injektoranordnung. Außerdem wird ein Nachrüsten der Injektoranordnung an eine mit Benzin betriebene Brennkraftmaschine erheblich vereinfacht. Dabei ist es auch vorteilhaft, dass an der Brennstoffverteilerleiste Ventiltassen vorgesehen sind, in die jeweils ein Einspritzventil eingefügt ist. Die Einspritzventile können dabei durch Verbindungsklammern mit den zugeordneten Ventiltassen verbunden sein.

Vorteilhaft ist es auch, dass die Brennstoffverteilerleiste zumindest im Wesentlichen aus einem aus Aluminium basierenden Stangenprofil ausgestaltet ist. Ferner ist es vorteilhaft, dass die Brennstoffverteilerleiste zumindest im Wesentlichen aus einem Edelstahlteil, insbesondere einem gelöteten Edelstahlteil, gebildet ist. Hierdurch ist die Ausgestaltung einer Brennstoffverteilerleiste möglich, die ausreichend steif ist, dem Druck des Erdgases standhält und zudem kostengünstig hergestellt werden kann.

Die Ausgestaltung der Injektoranordnung kann zwei oder mehr Einspritzventile aufweisen, wobei der Gegenhalter eine entsprechende Anzahl an Anschlussstücken umfasst. Hierdurch kann in Bezug auf den jeweiligen Anwendungsfall, insbesondere in Bezug auf die Anzahl der Zylinder der Brennkraftmaschine, eine geeignete Ausgestaltung der Injektoranordnung gewählt werden.

Somit kann eine kompakte und universell anwendbare Injektoranwendung ausgestaltet werden. Hierbei ist eine robuste und qualitativ hochwertige Ausgestaltung möglich. Diese kann insbesondere deutlich robuster und qualitativ hochwertiger als übliche Nachrüstsätze sein. Dabei kann eine einfache Montage auf ein Saugmodul oder im Motorraum ermöglicht werden. Hierbei ist es auch möglich, dass ein Standard erreicht wird, der eine Zertifizierung nach ECE R110 oder einem vergleichbaren Standard ermöglicht.

### Kurze Beschreibung der Zeichnungen

Bevorzugte Ausführungsbeispiele der Erfindung sind in der nachfolgenden Beschreibung anhand der beigefügten Zeichnungen, in denen sich entsprechende Elemente mit übereinstimmenden Bezugszeichen versehen sind, näher erläutert. Es zeigt:
Fig. 1 eine Injektoranordnung in einer räumlichen Explosionsdarstellung entsprechend einem ersten Ausführungsbeispiel der Erfindung;
Fig. 2 eine Injektoranordnung in einer räumlichen Darstellung entsprechend einem zweiten Ausführungsbeispiel der Erfindung;
Fig. 3 eine Injektoranordnung in einer räumlichen Darstellung entsprechend einem dritten Ausführungsbeispiel der Erfindung und
Fig. 4 eine Injektoranordnung in einer räumlichen Explosionsdarstellung entsprechend einem vierten Ausführungsbeispiel der Erfindung.

### Ausführungsformen der Erfindung

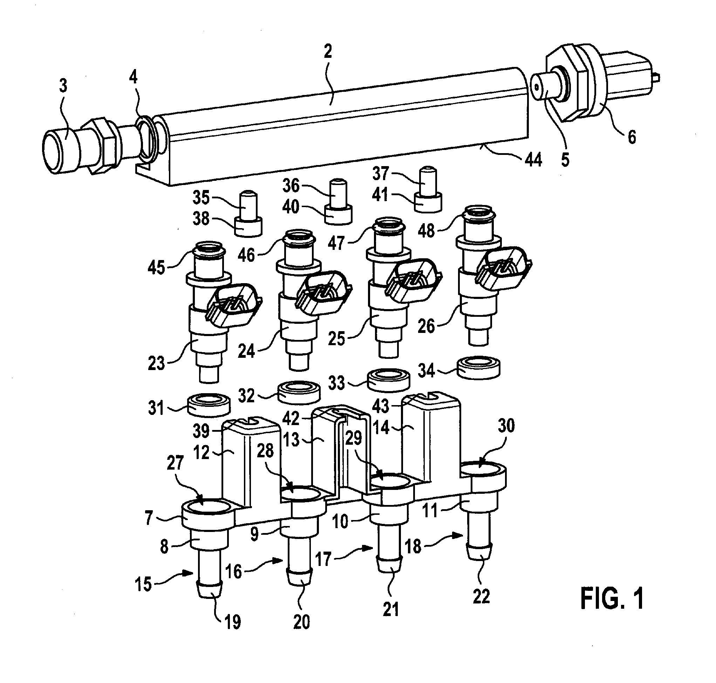

Fig. 1 zeigt eine Injektoranordnung 1 in einer räumlichen Explosionsdarstellung entsprechend einem ersten Ausführungsbeispiel. Die Injektoranordnung 1 kann insbesondere als Injektorblock 1 für Brennstoffeinspritzanlagen von gemischverdichtenden, fremdgezündeten Brennkraftmaschinen dienen. Die Injektoranordnung 1 weist eine Brennstoffverteilerleiste 2 auf, die aus einem metallischen Werkstoff, insbesondere Aluminium, ausgebildet sein kann. Speziell kann die Brennstoffverteilerleiste 2 aus einem Strangpressprofil ausgebildet sein. An der Brennstoffverteilerleiste 2 ist ein Anschlussstück 3 montiert. Hierbei ist ein Dichtring 4 vorgesehen, der zwischen dem Anschlussstück 3 und der Brennstoffverteilerleiste 2 angeordnet ist. An das Anschlussstück 3 kann beispielsweise über eine Verrohrung ein Brennstofftank angeschlossen werden. Der Brennstofftank kann hierbei zum Speichern von Erdgas, insbesondere komprimierten Erdgas (CNG) dienen. Über das Anschlussstück 3 wird dann komprimiertes Erdgas in die Brennstoffverteilerleiste 2 geführt. Ferner ist an die Brennstoffverteilerleiste 2 ein Sensor 5 montiert, wobei ein mit dem Sensor 5 verbundenes Anschlusselement eine Verbindung mit einem Steuergerät ermöglicht. Der Sensor 5 kann beispielsweise zum Messen des Druckes und der Temperatur des Erdgases in der Brennstoffverteilerleiste 2 dienen.

Die Injektoranordnung 1 weist außerdem einen Gegenhalter 7 auf, der Anschlussstücke 8, 9, 10, 11 umfasst. Ferner sind an dem Gegenhalter 7 Verbindungselemente 12, 13, 14 ausgestaltet. Der Gegenhalter 7 mit den Anschlussstücken 8 bis 11 und den Verbindungselementen 12 bis 14 ist in diesem Ausführungsbeispiel einstückig aus einem auf Kunststoff basierenden Kunststoffteil gebildet. Hierdurch ist eine kostengünstige Herstellung des gesamten Gegenhalters 7 mit den Anschlussstücken 8 bis 11 und den Verbindungselementen 12 bis 14 möglich.

Die Anschlussstücke 8 bis 11 weisen an ihren Ausgangsseiten 15, 16, 17, 18 jeweils eine Schlauchtülle 19, 20, 21, 22 auf. An die Schlauchtüllen 19 bis 22 kann jeweils ein Schlauch angeschlossen werden, um die Injektoranordnung 1 beispielsweise mit Saugrohren für einzelne Zylinder der Brennkraftmaschine zu verbinden.

Die Injektoranordnung 1 weist in diesem Ausführungsbeispiel vier Einspritzventile 23, 24, 25, 26 auf. Das erste Einspritzventil 23 ist an einer Eingangsseite 27 des ersten Anschlussstücks 8 an den Gegenhalter 7 gefügt. Entsprechend sind auch das zweite Einspritzventil 24 und die weiteren Einspritzventile 25, 26 an Eingangsseiten 28, 29, 30 der Anschlussstücke 9 bis 11 an den Gegenhalter 7 gefügt. Hierbei sind elastische Dichtringe 31, 32, 33, 34 vorgesehen, mittels der die Einspritzventile 23 bis 26 an den Gegenhalter 7 gefügt sind. Die elastischen Dichtringe 31 bis 34 umschließen hierbei die Einspritzventile 23 bis 26 jeweils an ihrem einspritzseitigen Ende. Die elastischen Dichtringe 31 bis 34 können aus einem Elastomer gebildet sein. Durch die elastischen Dichtringe 31 bis 34 ist eine schwimmende Lagerung der Einspritzventile 23 bis 26 gewährleistet. Durch die schwimmende Lagerung wird ein direkter Kontakt der Einspritzventile 23 bis 26 mit dem Gegenhalter 7 vermieden, so dass eine mögliche Schwingungsübertragung in die Einspritzventile 23 bis 26 vermieden ist. Solch eine mögliche Schwingungsübertragung kann zu einem erhöhten Verschleiß führen, der somit vermieden wird.

Die Injektoranordnung 1 weist ferner Befestigungselemente 35, 36, 37 auf, die in diesem Ausführungsbeispiel als Schrauben 35 bis 37, insbesondere Zylinderkopfschrauben 35 bis 37, ausgestaltet sind. Die Schraube 35 weist einen Bund 38 auf, der im montierten Zustand das Verbindungselement 12 an einer Öffnung 39 hintergreift. Die Schraube 35 wird in die Brennstoffverteilerleiste 3 eingeschraubt. Entsprechend weisen die Schrauben 36, 37 Bünde 40, 41 auf, die die Verbindungselemente 13, 14 an Öffnungen 42, 43 hintergreifen. In diesem Ausführungsbeispiel liegen die Verbindungselemente 12 bis 14 im montierten Zustand an einer Unterseite 44 der Brennstoffverteilerleiste 2 an. Im montierten Zustand sind die Einspritzventile 23 bis 26 dadurch zwischen dem Gegenhalter 7 und der Brennstoffverteilerleiste 2 eingespannt und in Bezug auf den Gegenhalter 7 schwimmend gelagert. Außerdem sind die Einspritzventile 23 bis 26 an ihrem der Brennstoffverteilerleiste 2 zugewandten Ende jeweils von einem elastischen Dichtring 45, 46, 47, 48 umschlossen, der eine Abdichtung zwischen den Einspritzventilen 23 bis 26 und der Brennstoffverteilerleiste gewährleistet. Die Dichtringe 45 bis 48 können aus einem Elastomer ausgebildet sein.

Im montierten Zustand ergibt sich somit eine kompakte Injektoranordnung. Diese kompakte Ausgestaltung erleichtert die weitere Montage, was bei einer Erstausrüstung als auch bei einer Nachrüstung erfolgen kann. Hierbei ergibt sich ein breiter Anwendungsbereich, da durch an die Schlauchtüllen 19 bis 22 anschließbare Schläuche eine flexible Anpassung an die jeweilige Brennkraftmaschine möglich ist. Außerdem kann auch bei einer Anpassung der Injektoranordnung 1 an eine andere Zylinderanzahl das konstruktive Grundprinzip beibehalten werden und es können einige Bauteile unverändert bei unterschiedlicher Zylinderanzahl montiert werden. Eine Anpassung kann beispielsweise durch eine Anpassung der Brennstoffverteilerleiste 2 und des Gegenhalters 7 erfolgen.

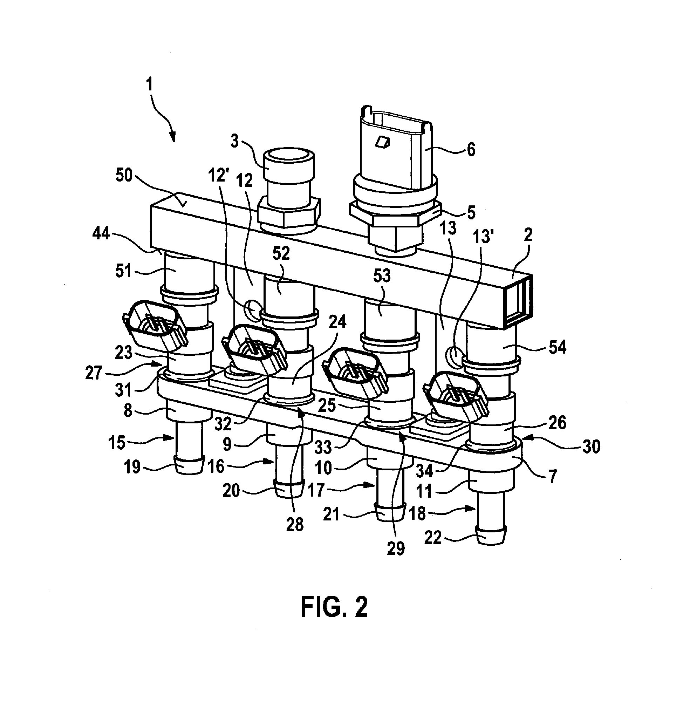

Fig. 2 zeigt eine Injektoranordnung 1 in einer räumlichen Darstellung entsprechend einem zweiten Ausführungsbeispiel. In diesem Ausführungsbeispiel ist der Gegenhalter 7 mit den Anschlussstücken 8 bis 11 als Kunststoffteil ausgestaltet. Der Gegenhalter 7 ist hierbei durch separate Verbindungselemente 12, 13 mit der Brennstoffverteilerleiste 2 verbunden. Die separaten Verbindungselemente 12, 13 sind einerseits auf geeignete Weise mit der Brennstoffverteilerleiste 2 und andererseits auf geeignete Weise mit dem Gegenhalter 7 verbunden. Die Ausgestaltung der jeweiligen Verbindungen kann beispielsweise durch Befestigungselemente, insbesondere Schrauben, insbesondere Zylinderkopfschrauben, durch Löten, Schweißen oder auf andere Weise erfolgen.

Die Brennstoffverteilerleiste 2 ist in diesem Ausführungsbeispiel aus einem Metall, insbesondere Edelstahl, ausgebildet. Hierbei ist die Brennstoffverteilerleiste 2 vorzugsweise aus einem gelöteten Edelstahlteil 2 ausgebildet.

Die Unterseite 44 der Brennstoffverteilerleiste 2 ist dem Gegenhalter 7 zugewandt. Auf einer von der Unterseite 44 abgewandten Oberseite 50, die eben ausgestaltet ist, sind in diesem Ausführungsbeispiel das Anschlussstück 3 und der Sensor 5 mit dem Anschlusselement 6 angebracht. Die Position des Anschlussstücks 3 und des Sensors 5 mit dem Anschlusselement 6 auf der Oberseite 50 kann gegebenenfalls auch anders erfolgen.

In diesem Ausführungsbeispiel sind an der Brennstoffverteilerleiste 2 Ventiltassen 51, 52, 53, 54 vorgesehen, in die jeweils eines der Einspritzventile 23 bis 26 mit seinem zulaufseitigen Ende eingefügt ist. Durch die Verbindung des Gegenhalters 7 mit der Brennstoffverteilerleiste 2 sind die Einspritzventile 23 bis 26 zuverlässig zwischen dem Gegenhalter 7 und der Brennstoffverteilerleiste 2 eingespannt.

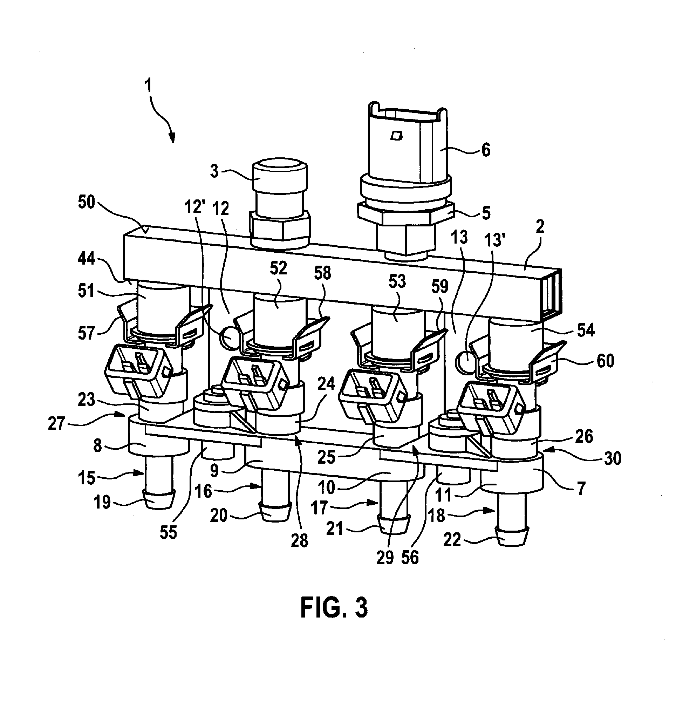

Fig. 3 zeigt eine Injektoranordnung 1 in einer räumlichen Darstellung entsprechend einem dritten Ausführungsbeispiel. In diesem Ausführungsbeispiel sind Befestigungsbolzen 55, 56 an dem Gegenhalter 7 angebracht, an denen eine Befestigung der Verbindungselemente 12, 13 möglich ist. Die Befestigungsbolzen 55, 56 können hierbei auch von dem Kunststoffmaterial des Gegenhalters 7 umspritzt sein. Hierdurch ist eine formschlüssige Verbindung zwischen den Verbindungsbolzen 55, 56 und dem Gegenhalter 7 ausgestaltet. Ferner ist es möglich, dass der Befestigungsbolzen 55 mit dem Verbindungselement 12 einstückig ausgestaltet ist. Entsprechend kann auch der Befestigungsbolzen 56 mit dem Verbindungselement 13 einstückig ausgestaltet sein. Die Verbindungselemente 12, 13 weisen Bohrungen 12', 13' auf, die eine Befestigung der Injektoranordnung 1 im Motorraum eines Fahrzeugs oder dergleichen ermöglichen.

Außerdem sind in diesem Ausführungsbeispiel Verbindungsklammern 57, 58, 59, 60 vorgesehen, die die Einspritzventile 23 bis 26 mit den Ventiltassen 51 bis 54 verbinden. Hierdurch sind die Einspritzventile 23 bis 26 an der Brennstoffverteilerleiste 2 gehalten.

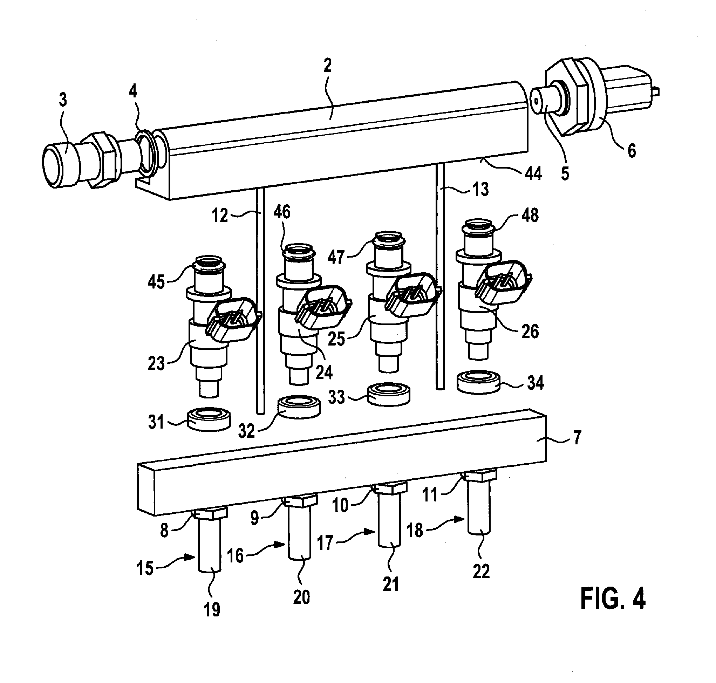

Fig. 4 zeigt eine Injektoranordnung 1 in einer räumlichen Explosionsdarstellung entsprechend einem vierten Ausführungsbeispiel. In diesem Ausführungsbeispiel sind die Verbindungselemente 12, 13, die den Gegenhalter 7 mit der Brennstoffverteilerleiste 2 verbinden, als Distanzhülsen 12, 13 ausgestaltet. Hierbei werden die Verbindungselemente 12, 13 mit der Brennstoffverteilerleiste 2 verschraubt oder verlötet. Außerdem ist der Gegenhalter 7 aus einem metallischen Werkstoff ausgebildet. Die Verbindungselemente 12, 13 werden mit dem Gegenhalter 7 verschraubt oder verlötet. Der Gegenhalter 7 kann beispielsweise aus Stahl oder Aluminium gebildet sein. Hierbei kann der Gegenhalter 7 aus einem Vierkant, aus einem Rundmaterial oder dergleichen ausgebildet sein. Die Anschlussstücke 8 bis 11 mit den Schlauchtüllen 19 bis 22 sind in diesem Ausführungsbeispiel aus einem metallischen Werkstoff gebildet. Hierbei sind die Anschlussstücke 8 bis 11 mit dem Gegenhalter 7 durch eine Schraub-, Löt- oder Schweißverbindung verbunden. Somit sind die Anschlussstücke 8 bis 11 form- oder kraftschlüssig mit dem Gegenhalter 7 verbunden.

Die Erfindung ist nicht auf die beschriebenen Ausführungsbeispiele, sondern auf den Gegenstand der beiliegenden Ansprüche beschränkt.

## Patentansprüche

1. Injektoranordnung (1), insbesondere Injektorblock für Brennstoffeinspritzanlagen von gemischverdichtenden, fremdgezündeten Brennkraftmaschinen, mit einer Brennstoffverteilerleiste (2), einem Gegenhalter (7), einem ersten Einspritzventil (23) und zumindest einem zweiten Einspritzventil (24), wobei der Gegenhalter (7) ein erstes Anschlussstück (8) und zumindest ein zweites Anschlussstück (9) aufweist, wobei das erste Einspritzventil (23) an einer Eingangsseite (27) des ersten Anschlussstücks (8) zumindest mittelbar an den Gegenhalter (7) gefügt ist, wobei das zweite Einspritzventil (24) an einer Eingangsseite (28) des zweiten Anschlussstücks (9) zumindest mittelbar an den Gegenhalter (7) gefügt ist, wobei der Gegenhalter (7) zumindest mittelbar mit der Brennstoffverteilerleiste (2) verbunden ist und wobei die Brennstoffverteilerleiste (2) zum Verteilen von Brennstoff auf die Einspritzventile (23, 24) dient.

2. Injektoranordnung nach Anspruch 1,
**dadurch gekennzeichnet,**
**dass** die Brennstoffverteilerleiste (2) zum Verteilen von Erdgas auf die Einspritzventile (23, 24) dient.

3. Injektoranordnung nach Anspruch 1 oder 2,
**dadurch gekennzeichnet,**
**dass** die Anschlussstücke (8, 9) an ihren Ausgangsseiten (15, 16) jeweils eine Schlauchtülle (19, 20) aufweisen.

4. Injektoranordnung nach einem der Ansprüche 1 bis 3,
**dadurch gekennzeichnet,**
**dass** der Gegenhalter (7) mit den Anschlussstücken (8, 9) aus einem auf Kunststoff basierenden Kunststoffteil (7) gebildet ist
oder
**dass** der Gegenhalter (7) und die Anschlussstücke (8, 9) aus zumindest einem metallischen Werkstoff gebildet sind und dass die Anschlussstücke (8, 9) form- und/oder kraftschlüssig mit dem Gegenhalter (7) verbunden sind.

5. Injektoranordnung nach einem der Ansprüche 1 bis 4,
**dadurch gekennzeichnet,**
**dass** die Einspritzventile (23, 24) mittels jeweils zumindest eines Dichtrings (31, 32) an den Gegenhalter (7) gefügt sind und dass die Dichtringe (31, 32) als elastische Dichtringe (31, 32) ausgebildet sind.

6. Injektoranordnung nach einem der Ansprüche 1 bis 5,
**dadurch gekennzeichnet,**
**dass** die Einspritzventile (23, 24) zwischen dem Gegenhalter (7) und der Brennstoffverteilerleiste (2) eingespannt und/oder in Bezug auf den Gegenhalter (7) schwimmend gelagert sind.

7. Injektoranordnung nach Anspruch 6,
**dadurch gekennzeichnet,**
**dass** der Gegenhalter (7) durch separate Verbindungselemente (12,13) mit der Brennstoffverteilerleiste (2) verbunden ist
oder
**dass** an dem Gegenhalter (7) zumindest ein Verbindungselement (12, 13, 14) ausgestaltet ist und dass das Verbindungselement (12, 13, 14) des Gegenhalters (7) mit der Brennstoffverteilerleiste (2) verbunden ist.

8. Injektoranordnung nach einem der Ansprüche 1 bis 7,
**dadurch gekennzeichnet,**
**dass** an der Brennstoffverteilerleiste (2) Ventiltassen (51, 52) vorgesehen sind, in die jeweils ein Einspritzventil (23, 24) eingefügt ist.

9. Injektoranordnung nach Anspruch 8,
**dadurch gekennzeichnet,**
**dass** die Einspritzventile (23, 24) durch jeweils eine Verbindungsklammer (57, 58) mit der zugeordneten Ventiltasse (51, 52) verbunden sind.

10. Injektoranordnung nach einem der Ansprüche 1 bis 9,
**dadurch gekennzeichnet,**
**dass** die Brennstoffverteilerleiste (2) zumindest im Wesentlichen auf einem auf Aluminium basierenden Stangenpressprofil ausgestaltet ist
oder
**dass** die Brennstoffverteilerleiste (2) zumindest im Wesentlichen aus einem Edelstahlteil (2), insbesondere gelötetem Edelstahlteil (2), gebildet ist.

## Claims

1. Injector arrangement (1), in particular injector block for fuel injection systems of mixture-compressing, applied-ignition internal combustion engines, having a fuel distributor rail (2), having a counter bracket (7), having a first injection valve (23) and having at least one second injection valve (24), wherein the counter bracket (7) has a first connection piece (8) and at least one second connection piece (9), wherein the first injection valve (23) is joined at least indirectly to the counter bracket (7) at an inlet side (27) of the first connection piece (8), wherein the second injection valve (24) is joined at least indirectly to the counter bracket (7) at an inlet side (28) of the second connection piece (9), wherein the counter bracket (7) is connected at least indirectly to the fuel distributor rail (2) and wherein the fuel distributor rail (2) serves for the distribution of fuel to the injection valves (23, 24).

2. Injector arrangement according to Claim 1, **characterized**
**in that** the fuel distributor rail (2) serves for the distribution of natural gas to the injection valves (23, 24) .

3. Injector arrangement according to Claim 1 or 2, **characterized**
**in that** the connection pieces (8, 9) have a respective hose nozzle (19, 20) at their outlet sides (15, 16).

4. Injector arrangement according to one of Claims 1 to 3,
**characterized**
**in that** the counter bracket (7) with the connection pieces (8, 9) is formed from a plastic-based plastics part (7),
or
**in that** the counter bracket (7) and the connection pieces (8, 9) are formed from at least one metallic material and in that the connection pieces (8, 9) are connected to the counter bracket (7) in positively locking and/or non-positively locking fashion.

5. Injector arrangement according to one of Claims 1 to 4,
**characterized**
**in that** the injection valves (23, 24) are joined to the counter bracket (7) by means of in each case at least one sealing ring (31, 32), and in that the sealing rings (31, 32) are in the form of elastic sealing rings (31, 32).

6. Injector arrangement according to one of Claims 1 to 5,
**characterized**
**in that** the injection valves (23, 24) are clamped between the counter bracket (7) and the fuel distributor rail (2) and/or are mounted in a floating manner relative to the counter bracket (7).

7. Injector arrangement according to Claim 6,
**characterized**
**in that** the counter bracket (7) is connected to the fuel distributor rail (2) by means of separate connecting elements (12, 13),
or
**in that** at least one connecting element (12, 13, 14) is implemented on the counter bracket (7), and in that the connecting element (12, 13, 14) of the counter bracket (7) is connected to the fuel distributor rail (2).

8. Injector arrangement according to one of Claims 1 to 7,
**characterized**
**in that** valve cups (51, 52) are provided on the fuel distributor rail (2), into which valve cups in each case one injection valve (23, 24) is inserted.

9. Injector arrangement according to Claim 8,
**characterized**
**in that** the injection valves (23, 24) are connected to the associated valve cup (51, 52) by means of in each case one connecting clip (57, 58).

10. Injector arrangement according to one of Claims 1 to 9,
**characterized**
**in that** the fuel distributor rail (2) is formed at least substantially from an aluminium-based extruded profile,
or
**in that** the fuel distributor rail (2) is formed at least substantially from a high-grade steel part (2), in particular a brazed high-grade steel part (2).

## Revendications

1. Agencement d'injecteur (1), en particulier bloc d'injecteur pour des systèmes d'injection de carburant de moteurs à combustion interne à compression du mélange et à allumage commandé, comprenant une rampe distributrice de carburant (2), une contre-butée (7), une première soupape d'injection (23) et au moins une deuxième soupape d'injection (24), la contre-butée (7) comprenant une première pièce de raccordement (8) et au moins une deuxième pièce de raccordement (9), la première soupape d'injection (23) étant jointe au moins indirectement à la contre-butée (7) au niveau d'un côté d'entrée (27) de la première pièce de raccordement (8), la deuxième soupape d'injection (24) étant jointe au moins indirectement à la contre-butée (7) au niveau d'un côté d'entrée (28) de la deuxième pièce de raccordement (9), la contre-butée (7) étant reliée au moins indirectement à la rampe distributrice de carburant (2) et la rampe distributrice de carburant (2) servant à distribuer du carburant aux soupapes d'injection (23, 24).

2. Agencement d'injecteur selon la revendication 1, **caractérisé en ce que**
la rampe distributrice de carburant (2) sert à distribuer du gaz naturel aux soupapes d'injection (23, 24).

3. Agencement d'injecteur selon la revendication 1 ou 2,
**caractérisé en ce que**
les pièces de raccordement (8, 9) comprennent respectivement un embout à olive (19, 20) au niveau de leurs côtés de sortie (15, 16).

4. Agencement d'injecteur selon l'une quelconque des revendications 1 à 3,
**caractérisé**
**en ce que** la contre-butée (7) est formée avec les pièces de raccordement (8, 9) à partir d'une partie en plastique (7) à base de plastique
ou
**en ce que** la contre-butée (7) et les pièces de raccordement (8, 9) sont formées à partir d'au moins un matériau métallique et en ce que les pièces de raccordement (8, 9) sont reliées par engagement par complémentarité de forme et/ou par force à la contre-butée (7).

5. Agencement d'injecteur selon l'une quelconque des revendications 1 à 4,
**caractérisé en ce que**
les soupapes d'injection (23, 24) sont jointes à la contre-butée (7) à chaque fois au moyen d'au moins une bague d'étanchéité (31, 32) et **en ce que** les bagues d'étanchéité (31, 32) sont réalisées sous forme de bagues d'étanchéité élastiques (31, 32).

6. Agencement d'injecteur selon l'une quelconque des revendications 1 à 5,
**caractérisé en ce que**
les soupapes d'injection (23, 24) sont serrées entre la contre-butée (7) et la rampe distributrice de carburant (2) et/ou sont montées flottantes par rapport à la contre-butée (7).

7. Agencement d'injecteur selon la revendication 6, **caractérisé**
**en ce que** la contre-butée (7) est reliée à la rampe distributrice de carburant (2) au moyen d'éléments de liaison séparés (12, 13)
ou
**en ce qu'**au moins un élément de liaison (12, 13, 14) est réalisé sur la contre-butée (7) et en ce que l'élément de liaison (12, 13, 14) de la contre-butée (7) est relié à la rampe distributrice de carburant (2).

8. Agencement d'injecteur selon l'une quelconque des revendications 1 à 7,
**caractérisé en ce que**
des coupelles de soupape (51, 52) sont prévues sur la rampe distributrice de carburant (2), dans lesquelles est insérée respectivement une soupape d' injection (23, 24).

9. Agencement d'injecteur selon la revendication 8,
**caractérisé en ce que**
les soupapes d'injection (23, 24) sont reliées à la coupelle de soupape (51, 52) associée au moyen d'une pince de liaison (57, 58) respective.

10. Agencement d'injecteur selon l'une quelconque des revendications 1 à 9,
**caractérisé**
**en ce que** la rampe distributrice de carburant (2) est réalisée au moins essentiellement à partir d'un profilé extrudé à base d'aluminium
ou
**en ce que** la rampe distributrice de carburant (2) est formée au moins essentiellement à partir d'une pièce en acier fin (2), en particulier d'une pièce en acier fin (2) brasée.
